# EUROPÄISCHE PATENTANMELDUNG

(11) **EP 1 215 571 A2**
(43) Veröffentlichungstag der Anmeldung: **19.06.2002**
(21) Anmeldenummer: 01127589.8
(22) Anmeldetag: 19.11.2001
(51) Int. Cl.: G06F 9/44

(54) **Verfahren zur automatischen Softwaregenerierung**

(30) Priorität: 20.11.2000 DE 10057575
(71) Anmelder: Foltinek, Andreas, 70806 Kornwestheim (DE)
(72) Erfinder: Foltinek, Andreas, 70806 Kornwestheim (DE)
(74) Vertreter: Grunert, Marcus, Dipl.-Phys.

(57) **Zusammenfassung**

Die Erfindung betrifft ein Verfahren zur automatischen Softwaregenerierung, bei dem die Eigenschaften einer durch die Software ermöglichten Applikation (Anwendung) abstrakt modelliert und anschließend maschinell in Software für diese Applikation umgesetzt werden, wobei durch Ausführung der Applikation ein gegebenenfalls aus mehreren Systemen zusammengesetztes technisches System beeinflußt wird. Es wird vorgeschlagen, daß aus der modellierten Applikationsbeschreibung neben dem Applikationsquellcode oder neben der zur Erzeugung dieses Quellcodes geeigneten Quellinformation mehrzielig zumindest eines der folgenden Zusatzelemente in vollständig integrierter Form generiert wird, nämlich
- Software zur Visualisierung und/oder zur Protokollierung und/oder Fernüberwachung/-bedienung der Applikation und/oder des technischen Systems,
- Software zur Simulation der Applikation und/oder des technischen Systems,
- Software und/oder Informationen zur Kommunikation innerhalb der Applikation und/oder mit anderen Systemen und/oder zwischen verteilten Systemen und
- Dokumentation für den Anwender und/oder für den Programmierer.

## Beschreibung

Die Erfindung betrifft ein Verfahren zur automatischen Softwaregenerierung, bei dem die Eigenschaften einer durch die Software ermöglichten Applikation (Anwendung) abstrakt modelliert und anschließend maschinell in Software für diese Applikation umgesetzt werden, wobei durch Ausführung der Applikation ein gegebenenfalls aus mehreren Systemen zusammengesetztes technisches System beeinflußt wird.

Zur Erhöhung der Effektivität bei der Softwareentwicklung werden in zunehmenden Maße beschreibungsbasierte Verfahren eingesetzt. Hierbei werden unabhängig von klassischen Programmiersprachen die Eigenschaften einer Anwendung abstrakt modelliert und später maschinell in Software für die Applikation umgesetzt. Vorteil dieser Verfahren ist eine signifikante Zeiteinsparung bei der Entwicklung aufgrund eines höheren Abstraktionsgrades, sowie dem Entfallen der manuellen Trivialcodeerstellung.

Für die Applikationsmodellierung, d.h. zum Erstellen der Applikationsbeschreibung, sind beispielhaft folgende Methoden bekannt: Objektorientierung (Vererben, Überladen, Virtualisieren etc.); Hierarchisierung; Kapselung; Modularisierung; Instanzierung; Integration von konventionellen Programmiersprachen und mathematischen Modellen; Funktionsmodellierung mit abstrakten Modellen; Generatoren für Benutzeroberflächen und Datenstrukturen sowie deren Verarbeitung.

Nach der Modellierung erfolgt anhand der Applikationsbeschreibung die automatische Generierung des Applikationsquellcodes. Vorher können im Rahmen einer Vorverarbeitung auf die Applikationsbeschreibung verschiedene Präprozessoren und Prüfprogramme angewendet werden, um logische Fehler, Widersprüche, Zeigerfehler, Codeleichen etc. zu erkennen.

In der Regel ist die Erzeugung des Applikationsquellcodes jedoch nicht ausreichend. Beispielsweise können Dokumentationen für den Benutzer, aber auch für den Programmierer selbst benötigt werden. Wünschenswert ist auch Software zur Visualisierung sowie Simulation der Applikation selbst sowie des durch die Applikation beeinflußten technischen Systems, d.h. Simulation der von der Applikation benötigten äußeren Parameter sowie der von der Applikation erzeugten Einflüsse auf das System.

Nachteil der existierenden Generierungsverfahren ist die Tatsache, daß die, zum Applikationsquellcode gehörende Zusatzinformationen und -software nicht oder nur bruchstückhaft generiert werden. Folglich ist hier eine manuelle Erstellung bzw. eine Nachbearbeitung oder eine separate Generierung durch den parallelen Einsatz von unterschiedlichen Verfahren notwendig. Da in diesen Fällen mehr als nur eine Designquelle erforderlich ist, ergeben sich die folgenden entscheidenden Nachteile:
- ungenügende Ausnutzung von Informationen und möglichen Synergieeffekten;
- redundante Informationen mit der Folge einer hohen Wahrscheinlichkeit von Inkonsistenzen;
- ein insgesamt erheblich erhöhter Entwicklungs- und Pflegeaufwand.

Aufgabe vorliegender Erfindung ist es daher, aus einer zentralen Designquelle für eine bestimmte Applikationssoftware eine redundanzfreie, effektive und vollständige Generierung aller benötigten Informationsziele zu ermöglichen.

Diese Aufgabe wird erfindungsgemäß durch ein Verfahren gemäß Anspruch 1 gelöst. Vorteilhafte Ausgestaltungen ergeben sich aus den Unteransprüchen sowie aus der nachfolgenden Beschreibung.

Beim erfindungsgemäßen Verfahren werden aus einer neuartigen modellierten Applikationsbeschreibung neben dem Applikationsquellcode (oder der hierzu notwendigen Quellinformationen) in einer vollständig integrierten Form alle benötigten Informationsziele generiert, wobei diese Informationsziele zumindest eines der folgenden Zusatzelemente umfassen:
- Software zur Visualisierung und/oder zur Protokollierung und/oder zur Fernüberwachung/-bedienung der Applikation und/oder des technischen Systems;
- Software zur Simulation der Applikation und/oder des technischen Systems und eventuell zur Kontersimulation des technischen Systems, d.h. der äußeren Einflüsse und Wechselwirkungen;
- Software und/oder benötigte Informationen zur Kommunikation innerhalb der Applikation und/oder mit anderen Systemen und/oder zwischen verteilten Systemen, d.h. zwischen Systemen, die physikalisch getrennt, jedoch durch Datenaustausch verbunden sind;
- Dokumentationen für den Anwender (Nutzer) der Applikation und/oder für den Programmierer (Ersteller) der Applikation).

Ein wichtiger Aspekt ist, dass der erfindungsgemäß erzeugte Applikationsquellcode sowie die Zusatzelemente plattformunabhängig auf verschiedenen Plattformen laufen kann.

Für eine vorteilhafte Lösung ist die Einhaltung der folgenden Randbedingungen erforderlich:
- Modellierung der vollständigen Software ohne Redundanzen;
- Generierung der Informationsziele (Senken) ohne Nachbearbeitung;
- Generierung der Informationsziele (Senken) unabhängig von Programmiersprachen, Betriebssystemen und Hardware;
- Unterstützung von verteilten sowie heterogenen Systemen;
- direkte Unterstützung von textuellen/graphischen Mensch-Maschinen-Schnittstellen/Interfaces;
- durchgängig objektorientierter Ansatz, z.B. bei Bezeichnungen, Einheiten, Werteumfang etc. von Daten;
- Einbeziehung weiterführender Informationen (z.B. Erklärungen, Hilfetexte, Kommentare) in die Modellierung;
- multilinguale Modellierung der Applikation;
- einfache und vollständige Portierbarkeit/Wiederverwendbarkeit von Softwareteilen.

Das erfindungsgemäße Generierungsverfahren geht in folgenden Schritten vor:
1. Erstellen einer Applikationsbeschreibung durch Modellierung, wobei hier der prinzipielle Aufbau (Struktur), nicht jedoch die konkrete Ausprägung (Syntax) relevant ist. Die Erstellung erfolgt vorteilhafterweise mit einer entsprechenden Bearbeitungssoftware (Editor).
2. Optionale maschinelle Vorverarbeitung der Applikationsbeschreibung, wie beispielsweise Präprozessierung und Optimierung, sowie die Anwendung von allgemein bekannten Methoden zur Verbesserung/Sicherung der Softwarequalität.
3. Mehrzielige vollintegrierte Generierung der Informationssenken (oben aufgeführte Zusatzelemente).

Im folgenden soll zunächst der Aufbau der Applikationsbeschreibung dargestellt werden.

Die Applikationsbeschreibung besteht beim erfindungsgemäßen Verfahren vorteilhaft aus hierarchisch geschachtelten Modulen, Zusatzinformationen sowie Instanzierungstabellen, die den Applikationsteil eines Projektes vollständig beinhalten. In vorteilhafter Ausgestaltung werden Module und deren Zusatzinformationen in sinnvoller Weise auf verschiedene Projekt- oder Bibliotheksdateien verteilt. Ein Modul bzw. eine Projektdatei kapselt typischerweise ein Teilproblem der Anwendung.

Ein Modul besteht konzeptionell aus mindestens folgenden Definitionsgruppen, die zur vollständigen Festlegung mindestens erforderlich sind, wobei in realer Anwendung diese aber auch nur teilweise auftreten können:
- Knotendefinitionen;
- Untermoduldefinitionen;
- Elementdefinitionen;
- Mensch-Maschine-Schnittstellendefinitionen (MMI=Mensch-Maschine-Interface) ;
- Funktionsdefinitionen.

Jede Definitionsgruppe kann beliebig viele (Einzel-) Definitionen beinhalten. Funktion und Bedeutung dieser Einzeldefinitionen werden weiter unten beschrieben.

Die zur Applikationsbeschreibung weiterhin vorteilhaft verwendeten Zusatzinformationen beinhalten Informationen wie Texte, Bilder, Visualisierer, Typdefinitionen etc., auf die innerhalb der Module Bezug genommen (referenziert) wird. In vorteilhafter Ausgestaltung werden diese Zusatzinformationen mit den zugehörigen Modulen in der selben Projektdatei abgelegt, die dann eine vollständig autarke und wiederverwendbare Einheit bildet.

Schließlich können vorteilhaft Instanzierungstabellen zur Applikationsbeschreibung verwendet werden, die Informationen beinhalten, die aufgrund von Mehrfachinstanzierungen der Module nicht im Modul direkt abgelegt werden können, und die sich ebenfalls nicht maschinell generieren lassen. Ein Beispiel hierfür sind Hardwareadressen.

Im folgenden soll der Aufbau eines Moduls zur Applikationsbeschreibung beim erfindungsgemäßen Software-Generierungsverfahren erläutert werden.

Da es für eine konkrete Formulierung (Syntax) der obengenannten Definitionen beliebige Ausgestaltungen gibt, ist in der folgenden Beschreibung der Definitionsgruppen nur prinzipiell deren Aufbau sowie Inhalt dargestellt. Alle definierten Bestandteile verfügen jeweils über die für die Senken (Informationsziele) erforderlichen Attribute und Informationen.

### Knotendefinitionen:

Diese Definition erlaubt die Verteilung der Applikation auf körperlich getrennte und datentechnisch gekoppelte Hardwaresysteme (verteilte Systeme). Durch Verwendung dieser Definition werden das zugehörige Modul sowie dessen eventuelle Untermodule eine logisch eigenständige Einheit. Vorteilhafterweise können hieraus mehrere Senken gleichen Typs (z.B. Applikationssoftware für die einzelnen Knoten von verteilten Hardwaresystemen) erzeugt werden.

Beispielhafte Attribute sind hier: Knotenname, Informationstext, Art der Hardware (Leistungsfähigkeit), Art der Kommunikation (Adresse).

### Untermoduldefinitionen:

Diese Definition erlaubt die Instanzierung (Einbindung) von Untermodulen.

Attribute sind hier beispielhaft: Modulname, Informationstext, zu übergebende Parameter.

### Elementdefinitionen:

Unter Elementen sind alle Daten sowie Hardwareein-/ausgänge des Moduls zusammengefaßt. Diese werden mit einem Typ (z.B. numerisch, alphanumerisch, selektiv, Zeit, Datum, etc.) sowie einer Zugehörigkeit/Verwendung (z.B. Parameter, Zustandsdaten, Meßdaten, Hardwareein-/ausgänge, Zeitgeber, Zähler, Gleichungsdaten, etc.) attributisiert.

Hardwareeingänge können ferner über Kontersimulationsgleichungen verfügen, die eine virtuelle Nachbildung der Umweltreaktionen zum Zwecke einer möglichst realistischen Simulation darstellen.

Elemente lassen sich zu Strukturen sowie n-dimensionalen Feldern zusammenfassen. Elemente sind objektorientiert angelegt, d.h. sie erlauben z.B. deren Zugriff und Darstellung ohne Beachtung des Typs und der Zugehörigkeit/Verwendung.

Attribute sind hier beispielhaft: Elementname, Informationstext, Datentyp, Zugehörigkeit (Verwendung), Standardwert, Wertebereich, Einheit, Darstellungs-/Editierberechtigungen, Hardwarezuordnung, Kontersimulationsgleichungen.

### Mensch-Maschinen-Schnittstellendefinitionen:

Diese umfassen alle einem Modul zugehörigen MMI(Mensch-Maschine-Interface)-Teile für die Applikation sowie für die erfindungsgemäß generierten Zusatzelemente (Informationsziele, Senken). Vorteilhafterweise wird die MMI-Definition nochmals in Untergruppen, sogenannten Oberflächen zerlegt, wobei eine Oberfläche einen abgeschlossenen Teil des MMI beinhaltet (z.B. Parameterbearbeitung, Zustandsdarstellung, Prozessvisualisierung, etc.).

Die eigentliche MMI-Definition kann beispielhaft mit folgenden Befehlen erfolgen:
- Text, Bild, Linie, Rechteck, Kreis, Bitmap, Definition von Unterbildern;
- Elemente darstellen (als Text oder in graphischer Form), Histogramme darstellen;
- Seiten, Menüs, Listen, Schaltflächen (Buttons);
- Aktionen (Manipulation von Elementen, Verzweigungen in den Menüs, Seiten, Oberflächen);
- bedingte Oberflächenteile in Abhängigkeit von Elementen.

Ferner wird vorteilhafterweise bei der Darstellung von Elementen automatisch auf deren objektorientiert hinterlegte Attribute, wie Name, Beschreibung, Einheit und Darstellungsattribute, zurückgegriffen.

### Funktionsdefinitionen:

Die Funktionsdefinition eines Moduls besteht aus einer beliebigen Anzahl von Funktionen. Die Art der Beschreibung kann - auch gemischt - in beliebiger Form erfolgen, z.B. durch konventionelle Programmiersprachen, abstrakte Modelle, etc., und wird gegebenenfalls von externen Compilern umgesetzt.

Eine Funktion beinhaltet typischerweise eine logische Teilfunktion des Moduls und verfügt über Attribute, mit denen das Betriebssystem des Zielsystems die Abarbeitung steuern kann (z.B. Permanentabarbeitung, zeitkritisch/-unkritisch, Aufrufhäufigkeit, ereignisgetriggert, MMI-getriggert).

In vorteilhafter Ausgestaltung kann von der Funktionsdefinition auf die Elemente zugegriffen werden.

Nach dieser Beschreibung des Modulaufbaus sollen im folgenden die Eigenschaften einer vorteilhaften Applikationsbeschreibung konzeptionell dargelegt werden:
- Module können beliebig parallel und/oder hierarchisch angefordert werden sowie deren Eigenschaften an andere Module vererben.
- Die Instanzierung der Module erfolgt über globale Instanzierungslisten, oder wahlweise bei Einfachinstanzierung auch direkt im Modul.
- Module können als autarke Einheit modelliert werden, d.h. sie beinhalten alle benötigten Informationen lokal und können daher sehr einfach weiterverwendet/übertragen werden.
- Die Verwendung von Bibliotheken ist für Module als auch für Zusatzinformationen in jeder genannten Informationsart möglich (Texte, Bilder, Visualisierer, Datentypen, Funktionen etc.)
- Element- und Modulattribute werden objektorientiert (Virtualität) behandelt.
- Alle Bestandteile einer Applikationsbeschreibung werden mit weiterführenden Informationen attributisiert, wobei diese Informationen an alle Senken weitergegeben werden.
- Die Ablage der Informationen eines/mehrerer Module erfolgt in einer Datei. Untermodule (sofern diese weiterverwendet werden sollen) und Bibliotheken werden in separaten Dateien abgelegt.
- Die Lösung von komplexen Applikationen mit verteilter und ggf. heterogener Hardware bzw. mit Multiprozessorsystemen erfolgt vorteilhaft in einer zentralen Beschreibung, in der die Verteilung der Module statisch oder dynamisch beschrieben wird.

Nachdem eine Applikationsbeschreibung nach den obengenannten Modellstrukturen vorgenommen worden ist, kann eine maschinelle Vorverarbeitung der Applikationsbeschreibung erfolgen, durch die eine Optimierung, Qualitätssicherung sowie eine Analyse und Überprüfung nach Fehlern und Widersprüchen erfolgt. Diese Vorverarbeitung ist in hohem Maße abhängig von der verwendeten allgemeinen Syntax sowie von den verwendeten Beschreibungsformen innerhalb der Funktionen. Da beide beliebig ausgestaltet werden können, ist die softwaretechnische Umsetzung der Vorverarbeitung hier nicht relevant.

Erfindungsgemäß können nunmehr mittels eines Zielgenerators maschinell/automatisch die verschiedenen Informationsziele (Senken, Zusatzelemente zur eigentlichen Applikationsquellinformation) ausgebildet werden.

Da die genaue Ausbildung der Senken von Zielsystem, Programmiersprache, Compiler, PC-Plattform etc. abhängt, werden für die Senken lediglich deren erfindungsgemäße Eigenschaften beschrieben. Global gilt für alle Senken erfindungsgemäß, daß diese wie im folgenden dargelegt direkt generiert werden und/oder die Informationen generiert werden (Quellcode und/oder Tabellen/Listen und/oder Binärdaten und/oder andere Formen von Softwareinformationen), die eine Erzeugung durch weiterführende, externe Systeme ermöglichen. Generierungsergebnisse können sein:

### Applikationsinformationen

- Strukturen zur (objektorientierten) Verwaltung der Module
- Strukturen zur (objektorientierten) Verwaltung der Elemente
- Applikationsfunktionen
- Applikations-MMI (falls in Applikation vorhanden)
- Texte/Grafiken in multilingualer Form (falls in Applikation vorhanden)
- Bei verteilten Systemen kann für die einzelnen Hardwareknoten eine entsprechend individualisierte Information generiert werden.
- Die generierte Information ist unabhängig von Compiler, Betriebssystem und Zielhardware.

### PC/Web-Visualisierung

- Strukturen zur (objektorientierten) Kommunikation mit der Applikationshardware
- Strukturen zur (objektorientierten) Verwaltung der Elemente
- Visualisierungs-MMI
- Texte/Grafiken in multilingualer Form

### PC-Offline-Simulation

- Applikationsdefinition (s.o.)
- PC/Web-Visualisierung (s.o., zzgl. der Elemente zur Durchführung der Kontersimulation)

### Anwenderdokumentation

- Liste Parameter (einschließlich Attribute)
- Liste der Zustands-/Meßdaten
- Liste der Ein-/Ausgänge
- Informationen über die Funktionen der Applikation (falls in Applikationsbeschreibung vorhanden)
- Übersicht der MMI-Struktur (falls in Applikation vorhanden)
- Detaildarstellung der einzelnen Teile des MMI sowie Informationen über deren Bedienung und Funktionen (falls in Applikation vorhanden)

### Softwaredokumentation

- Anwenderdokumentation (s.o. )
- Modulstruktur (Zusammenhänge)
- Informationen zur Strukturierung der Module untereinander
- Informationen zum Moduleinhalt (einschließlich Funktionalität)

Gegenüber existierenden Software-Generierungsverfahren bietet das erfindungsgemäße Verfahren die folgenden Vorteile:
- Es existiert nur eine, redundanzfreie Softwarebeschreibung;
- Alle Informationsziele/Senken sind vollständig generierbar;
- Inkonsistenzen sind innerhalb einer Senke sowie zwischen den einzelnen Senken unmöglich;
- Es ist keine manuelle Nachbearbeitung der einzelnen Senken erforderlich;
- Vollständige integrierte Unterstützung des Mensch-Maschine-Interface;
- Hochgradige Ausnutzung der objektorientierten Modellierung von Modulen und Elementen, insbesondere im Rahmen des Mensch-Maschine-Interface.

In Summe ergibt sich eine erhebliche Verkürzung des Entwicklungs-, des Dokumentations- und Pflegeaufwandes bei der Generierung von Software.

Im folgenden sollen Ausführungsbeispiele anhand der beigefügten Zeichnungen die Erfindung und deren Vorteile näher erläutern.
- Figur 1: zeigt eine stark vereinfachte Darstellung einer möglichen Ausgestaltung des erfindungsgemäßen Designflusses zur Softwaregenerierung.
- Figur 2: zeigt exemplarisch die Applikationshierarchisierung, d.h. die beispielhafte Struktur einer Applikationsbeschreibung, die aus einer zentralen Projektdatei sowie einer eingebundenen Projektdatei besteht.
- Figur 3: zeigt eine beispielhafte Bildschirmausgabe, die mit der erfindungsgemäß erzeugten Software zur Visualisierung oder Simulation hergestellt werden kann.
- Figur 4: zeigt das Beispiel einer am Bildschirm ausgegebenen mit dem erfindungsgemäßen Verfahren erzeugten Softwaredokumentation.

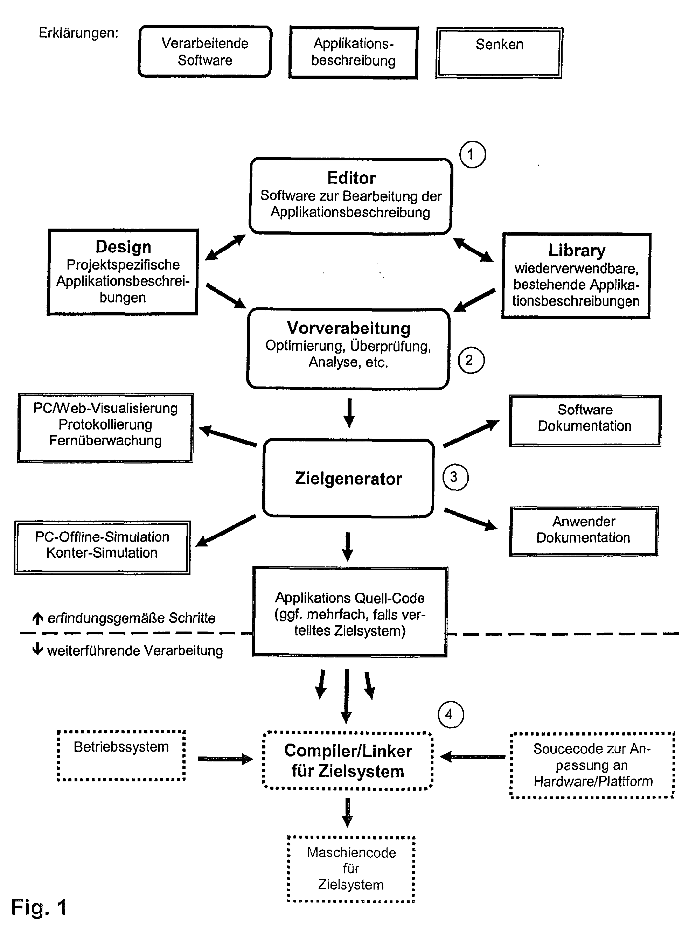

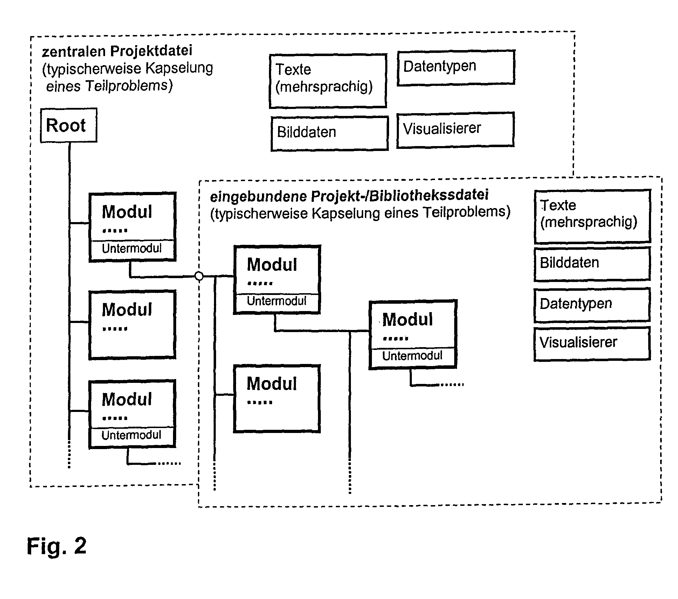

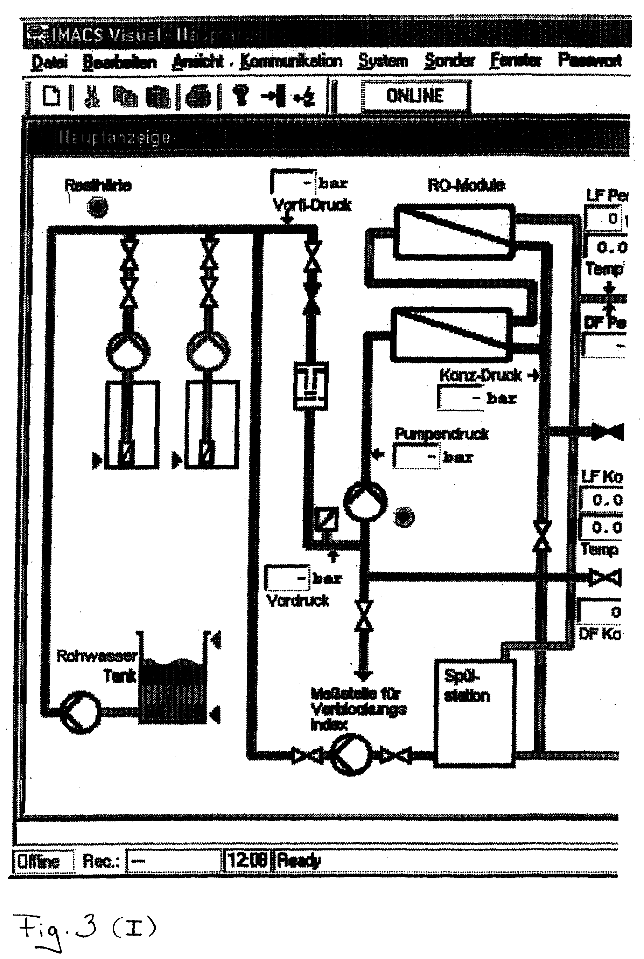

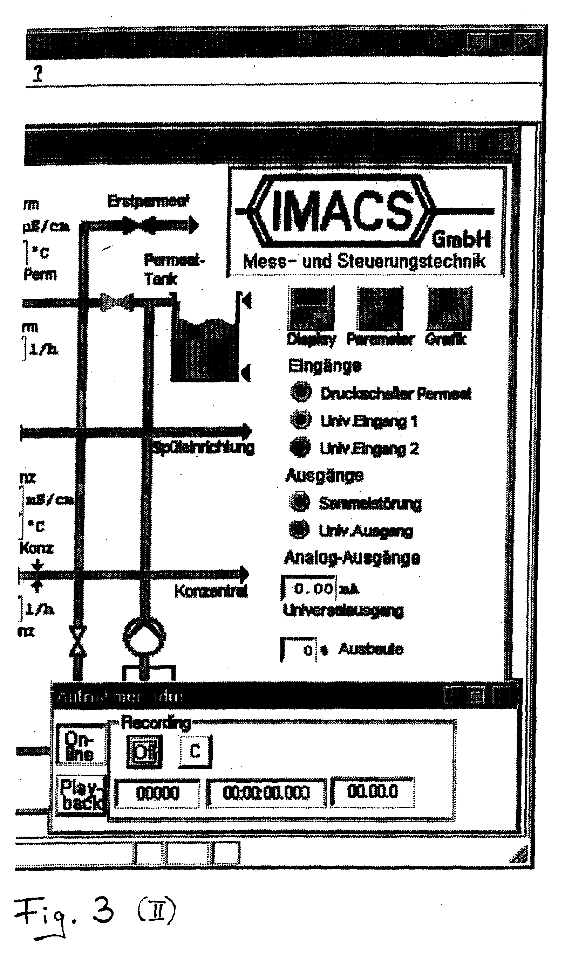

Die Figuren 1 und 2 erklären schematisch und exemplarisch Designfluß und Applikationshierarchisierung bei der erfindungsgemäßen Softwaregenerierung.

Im folgenden soll ein Applikationsbeispiel im Detail erörtert werden.

### Problemstellung:

Automatische Härteprüfung eines Werkstückes durch Eindringen einer konischen Stahlspitze in den Prüfling mit folgendem Ablauf:
1. Aufbringen der Prüfkraft
2. Prüfzeit abwarten
3. Einlesen des Meßergebnisses
4. falls Prüfung i.O. => weiterleiten des Prüflings falls Prüfung nicht i.O. => Prüfling als Ausschuß aussortieren
5. mit 1 fortfahren

Bezüglich des Automatisierungssystems bestehen folgende Forderungen:
- Das Aufbringen der Prüfkraft erfolgt durch Freigabe eines Zylinders sowie Regelung der Prüfkraft über die Vorgabe Zylinderdruck (interne Regelung).
- Das korrekte Aufbringen der Prüfkraft wird von der Prüfmaschine mit einer digitale Rückmeldung (Sensor) angezeigt. Bei fehlendem Signal (nach einer bestimmten Zeit) wird in einen Fehlerzustand verzweigt.
- Die eigentliche Härteprüfung erfolgt mit einem separaten Weg-Meßgerät, das dem Automatisierungssystem die Eindringtiefe in Form eines analogen Signals übergibt. Die Applikation vergleicht dieses mit einem Sollwert und entscheidet über i.O. / nicht i.O. (= n.i.O.).
- Das Prüfergebnis wird einer externen Einheit in Form eines i.O. bzw. n.i.O. Ausganges zugänglich gemacht.
- Über ein geräteinternes MMI sollen die Parameter veränderbar sein sowie der aktuelle Anlagenzustand dargestellt werden.
- Über eine serielle Schnittstelle soll eine externe Visualisierungseinheit angeschlossen werden, die alle Informationen des geräteinternen MMI sowie den Kraft/Wegverlauf einer Prüfung darstellt. Diese Software, sowie eine Software zur Offline-Simulation wird parallel aus gleicher Quelle generiert.

Das Automatisierungssystem verfügt über:

### Hardware-Ein-Ausgänge:

- Startsignal (zum Starten einer Prüfung) (digitaler Ausgang)
- Endlagenrückmeldung der Prüfkraftaufbringung (digitaler Eingang)
- Aktivierung der Prüfkraftaufbringung (digitaler Ausgang)
- IO-Meldung (digitaler Ausgang)
- NIO-Meldung (digitaler Ausgang)
- Vorgabe Zylinderdruck (analoger Ausgang)
- Meßeingang: Prüfkraft (analoger Eingang)
- Meßeingang: Eindringtiefe (analoger Eingang)

### Parameter:

- Zeitlimit "Vorfahren" (der Kraftaufbringung, bis Sensor erreicht) (in Sekunden)
- Prüfzeit (in 1/10s)
- Prüfkraft (Vorgabewert in 1/10kN)
- max. Eindringtiefe (in µm)
- min. Eindringtiefe (in µm)
- P-Anteil des Kraft PI-Reglers
- I-Anteil des Kraft PI-Reglers

### Applikationsbeschreibung/-modellierung:

Gemäß dem beschriebenen Problem wird eine Lösung modelliert, die aus den Modulen **ModPrüf** (grundsätzliche Steuerung des Prüfablaufs) und **ModRegPI** (PI-Regler) sowie Zusatzinformationen besteht.
Das Modul ModRegPI hat Bibliothekscharakter und kann ggf. schon in einer Bibliothek vorhanden oder in einer solchen angelegt werden.

In realer Ausführung kann das Modul ModPrüf wiederum in größeren Prozessen als Untermodul eingesetzt werden.

### Zusatzinformationen:

Folgende Zusatzinformationen werden eingerichtet:
- **Texte:**: multilinguale Texttabelle, die alle verwendeten Texte enthält
- **Bilder:**: Definition aller in den Modulen benötigten Bilder/Grafiken

### Datentypen:

- *TAusEin*:: selektiv, mögliche Zustände: AUS und EIN
- *TKraft*:: numerisch, in [kN], 1 Dezimalstelle, Bereich: 0.0 ...99.9
- *TTiefe*:: numerisch, in [µm], ohne Dezimalstelle, Bereich: 0 ... 2000
- *TDruck*:: numerisch, in [bar], 1 Dezimalstelle, Bereich: 0.0 ... 15.0
- *TSek*:: numerisch, in [s], 1 Dezimalstelle, Bereich: 0.0 ... 60.0
- *TProz*:: numerisch, in [%], ohne Dezimalstelle, Bereich: 0 ...200

### Visualisierer:

Defintionen, auf welche Art und Weise Daten/Informationen im MMI dargestellt werden.

### Modul "ModPrüf":

### Untermodule:

- Eine Instanz von Modul **ModReg.** Instanzname: ***MRegler***

### Elemente:

- *Start:*: Triggereingang zum Starten einer Prüfung
Datentyp: *TAusEin*, Zuordnung: dig. Eingang
- *Endlage:*: Rückmeldung Endlage erreicht
Datentyp: *TAusEin,* Zuordnung: dig. Eingang

- *Zylinder:*: Freigabe des Prüfkraftzylinders
Datentyp: *TAusEin,* Zuordnung: dig. Ausgang
- *IO-Meldung*:: IO-Meldung an eine externe Einheit
Datentyp: *TAusEin,* Zuordnung: dig. Ausgang
- *NIO-Meldung*:: NIO-Meldung an eine externe Einheit
Datentyp: *TAusEin*, Zuordnung: dig. Ausgang

- *Eindringtiefe*:: Meßergebnis nach der Prüfung
Datentyp: *TTiefe,* Zuordnung: analoger Eingang
- *Prüfkraft*:: Meßwert der Prüfkraft (aktueller Wert)
Datentyp: *TKraft*, Zuordnung: analoger Eingang

- *min. Eindringtiefe:*: unterer Grenzwert für Eindringung
Datentyp: *TTiefe,* Zuordnung: Parameter
- *max. Eindringtiefe:*: oberer Grenzwert für Eindringung
Datentyp: *TTiefe,* Zuordnung: Parameter
- *Prüfdauer*:: Dauer der Eindringung
Datentyp: *TSek*, Zuordnung: Parameter

### MMI-Steuerungssystem (zweizeiliges Display):

◆ falls aktueller Zustand ungleich BEREIT (= d.h. es wird geprüft)
   obere Zeile: aktuelle Eindringtiefe
   untere Zeile: IO/NIO-Meldung
◆ sonst (= d.h. es wird nicht geprüft)
   Kopfzeile mit Hautpmenümeldung
   untere Zeile: Darstellung eine Zeile des Hauptmenüs. Hier können die Parameter eingesehen und verändert werden.

### MMI-Visualisierungssystem (PC unter Windows):

◆ Darstellung der Meßdaten sowie der Prüfparameter in grafischer Form, ggf. auf mehrere Fenster verteilt

### Funktionen: (hier als Statusmaschine realisiert)

- Status BEREIT:: Bei Eintreten: Die Ausgänge *Zylinder, IO-Meldung* und *NIO-Meldung* inaktivieren aktivieren.
Falls Eingang *Start* aktiv, dann zum Status ZYLINDER EIN
- Status ZYLINDER_EIN:: Bei Eintreten: Den Ausgang *Zylinder* aktivieren, Zeit starten
Falls Eingang *Endlage* aktiv, dann zum Status MESSEN
Falls Zeit > 3s, dann zum Status ZYLINDER EIN
- Status MESSEN: Bei Eintreten: von Untermodul ***MRegler*** das Flag *Freigabe* aktivieren, Zeit starten
Falls (Zeit *> Prüfdauer)* UND *(Eindringtiefe < min. Eindringtiefe),* dann zum Status TEST_NIO
Falls (Zeit *> Prüfdauer)* UND *(Eindringtiefe > max. Eindringtiefe),* dann zum Status TEST_NIO
sonst, falls (Zeit > *Prüfdauer)* zum Status TEST_IO
- Status TEST_IO: Bei Eintreten: von Untermodul ***MRegler*** das Flag *Freigabe* inaktivieren, Ausgang *IO-Meldung* aktivieren, Ausgang *Zylinder* inaktivieren, Zeit starten
Falls Zeit > 3s, dann zum Status BEREIT
- Status TEST_NIO: Bei Eintreten: von Untermodul ***MRegler*** das Flag *Freigabe* inaktivieren, Ausgang *NIO-Meldung* aktivieren, Ausgang *Zylinder* inaktivieren, Zeit starten
Falls Zeit > 3s, dann zum Status BEREIT
- Status FEHLER: nicht weiter spezifiziert

### Modul "ModRegPI":

### Untermodule:

keine

### Elemente:

- *Freigabe*:: Triggereingang zum Starten einer Prüfung
Datentyp: *TAusEin,* Zuordnung: dig. Eingang
- *Prüfkraft*:: Meßwert der Prüfkraft (aktueller Wert)
Datentyp: *TKraft,* Zuordnung: analoger Eingang
- *Prüfdruck*:: Meßwert der Prüfkraft (aktueller Wert)
Datentyp: *TDruck,* Zuordnung: analoger Ausgang

- *P-Anteil*:: P-Anteil der Kraftregelung (über Druckausgang)
Datentyp: *TProz,* Zuordnung: Parameter
- *I-Anteil:*: I-Anteil der Kraftregelung (über Druckausgang)
Datentyp: *TProz,* Zuordnung: Parameter

### MMI-Steuerungssystem:

- nicht weiter spezifiziert -

### MMI-Visualisierungssystem:

- nicht weiter spezifiziert -

### Funktionen: (z.B. als Echtzeit-C-Code)

Regelalgorithmus, nicht weiter spezifiziert

### Generierungsergebnisse:

### Applikationscode:

Der in diesem Applikationsbeispiel erzeugte Quellcode beinhaltet folgende Teile:
- Listen der Elemente, in denen alle erforderlichen Informationen und Attribute hinterlegt sind
- Klassen/Strukturen für die angelegten Module
- Strukturen-/Instanzen zur Datenbeschreibung
- Strukturen-/Instanzen zur MMI-Beschreibung, die von einem Interpreter auf der Zielhardware abgearbeitet werden
- Verschiedene Funktionscodeteile die teilweise aus einer Statusmaschinen generiert wurden

### Visualisierung:

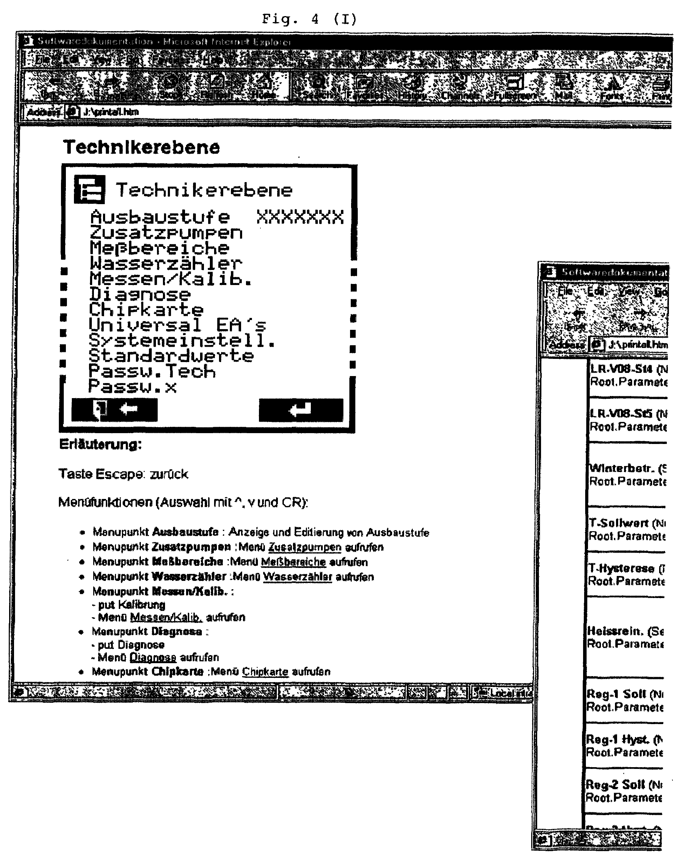

Diese ist dargestellt in Figur 3 (jedoch an einem anderen Beispiel).

### Offline-Simulation:

Die Offline-Simulation besteht prinzipiell aus der Visualisierung (vgl. Figur 3) sowie dem, für einen PC kompilierten Applikationscode. Beide Teile werden intern gekoppelt, wobei sich durch die Kontersimulation eine nahezu realistisches Verhaltensweise ergibt. Optisch entspricht die Simulation weitgehend der Visualisierung.

### Dokumentation:

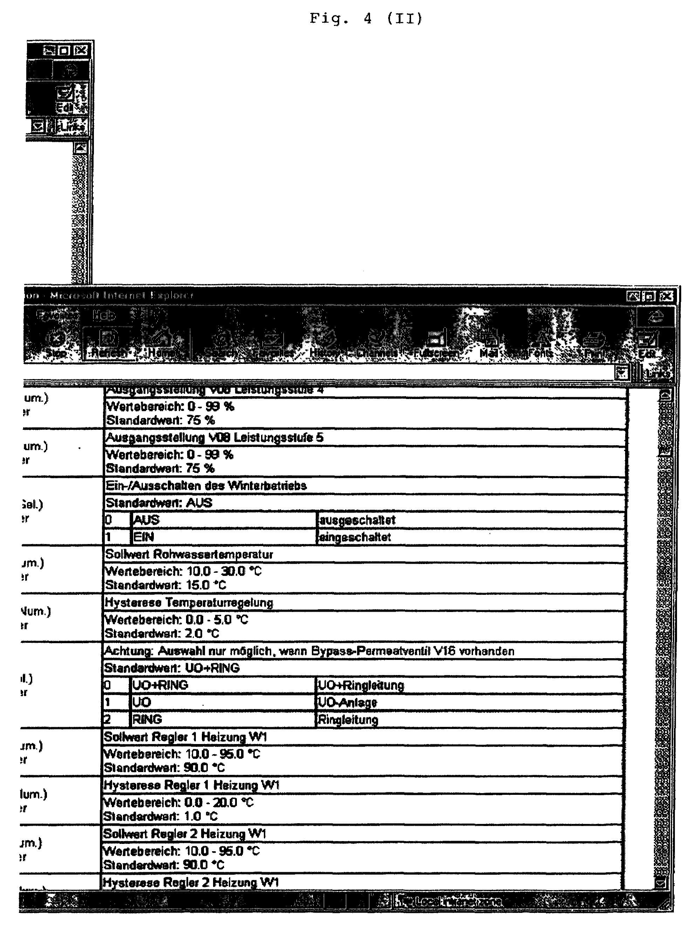

Diese ist dargestellt in Figur 4 (jedoch an einem anderen Beispiel).

## Patentansprüche

1. Verfahren zur automatischen Softwaregenerierung, bei dem die Eigenschaften einer durch die Software ermöglichten Applikation (Anwendung) abstrakt modelliert und anschließend maschinell in Software für diese Applikation umgesetzt werden, wobei durch Ausführung der Applikation ein gegebenenfalls aus mehreren Systemen zusammengesetztes technisches System beeinflußt wird,
**dadurch gekennzeichnet,**
**daß** aus der modellierten Applikationsbeschreibung neben dem Applikationsquellcode oder neben der zur Erzeugung dieses Quellcodes geeigneten Quellinformation mehrzielig zumindest eines der folgenden Zusatzelemente in vollständig integrierter Form generiert wird, nämlich
- Software zur Visualisierung und/oder zur Protokollierung und/oder Fernüberwachung/-bedienung der Applikation und/oder des technischen Systems,
- Software zur Simulation der Applikation und/oder des technischen Systems,
- Software und/oder Informationen zur Kommunikation innerhalb der Applikation und/oder mit anderen Systemen und/oder zwischen verteilten Systemen und
- Dokumentation für den Anwender und/oder für den Programmierer.

2. Verfahren nach Anspruch 1, **dadurch gekennzeichnet, daß** neben der Software zur Simulation der Applikation auch Software zur Kontersimulation des technischen Systems generiert wird, das durch die Applikation beeinflußt werden soll.

3. Verfahren nach Anspruch 1 oder 2, **dadurch gekennzeichnet, daß** die Applikation durch ein/eine oder mehrere Module, Zusatzinformationen und evtl. Instanzierungstabellen modelliert wird, wobei
- ein Modul vorteilhaft ein Teilproblem der Applikation beinhaltet,
- die Zusatzinformationen Informationen wie Texte, Bilder, Visualisierer und Typdefinitionen enthalten, auf die innerhalb der Module Bezug genommen wird, und
- die Instanzierungstabellen Informationen enthalten, die im Falle von Mehrfachinstanzierungen der Module nicht im Modul selbst abgelegt werden können und sich nicht maschinell generieren lassen, wie beispielsweise Hardwarezuordnungen.

4. Verfahren nach Anspruch 3, **dadurch gekennzeichnet, daß** ein Modul durch die folgenden Definitionsgruppen vollständig festgelegt wird:
- Knotendefinitionen zur Verteilung der Applikation auf physikalisch getrennte und datentechnisch gekoppelte Systeme (verteilte Systeme),
- Untermoduldefinitionen zur Instanzierung (Einbindung) von Untermodulen,
- Elementdefinitionen zur Zusammenfassung aller Daten sowie Hardware- und Kommunikationsein-/ausgänge eines Moduls,
- Mensch-Maschine-Schnittstellendefinitionen zur Definition aller innerhalb eines Moduls benötigten Bestandteile zum Herstellen einer Schnittstelle zum Benutzer und
- Funktionsdefinitionen bestehend aus einer Anzahl von Funktionen eines Moduls.
